# EUROPÄISCHE PATENTANMELDUNG

(11) **EP 1 790 528 A1**
(43) Veröffentlichungstag der Anmeldung: **30.05.2007**
(21) Anmeldenummer: 06024280.7
(22) Anmeldetag: 23.11.2006
(51) Int. Cl.: B60Q 1/26

(54) **Vorrichtung zur Beleuchtung der Griffkontur eines Fahrzeug-Außengriffs**

(30) Priorität: 28.11.2005 DE 102005056845
(71) Anmelder: Huf Hülsbeck & Fürst GmbH & Co. KG, 42551 Velbert (DE); APAG Elektronik AG, 8600 Dübendorf (CH)
(72) Erfinder: Pally, Roland, 8606 Greifensee (CH); Müller, Dirk, 45359 Essen (DE); Rohlfing, Manfred, 42549 Velbert (DE); Mönig, Stefan, 58332 Schweim (DE)
(74) Vertreter: Kohler Schmid Möbus

(57) **Zusammenfassung**

Bei einem Fahrzeug-Außengriff (4), insbesondere Außentürgriff, mit mindestens einer im Gehäuse des Außengriffs (4) angeordneten Lichtquelle (12) und mit einer oder mehreren Lichtaustrittsflächen (8), die die Kontur des Außengriffs (4) hinterleuchten oder leuchten lässt bzw. lassen, ist bzw. sind die eine oder mehreren Lichtaustrittsflächen (8) erfindungsgemäß auf der Oberseite (6) des Außengriffs (4) vorgesehen und durch einen sich längs des Außengriffs (4) erstreckenden Lichtleiter (7) gebildet.

## Beschreibung

Die vorliegende Erfindung betrifft einen Fahrzeug-Außengriff, insbesondere Außentürgriff, mit mindestens einer im Gehäuse des Außengriffs angeordneten Lichtquelle und mit einer oder mehreren Lichtaustrittsflächen, die die Kontur des Außengriffs hinterleuchten oder leuchten lässt bzw. lassen.

Ein derartiger Fahrzeug-Außengriff ist beispielsweise durch EP 1 188 615 A2, DE 299 17 921 U1, DE 100 39 685 A1, US 2004/0233677 A1 und DE 100 60 780 A1 bekannt geworden.

Bei all diesen bekannten Fahrzeug-Außengriffen sind eine oder mehrere Lichtaustrittsflächen an der Vorderseite des Außengriffs vorgesehen, um die Kontur des Außengriffs zu beleuchten. Zur Beleuchtung einer Griffschale des Außengriffs sind bei diesen bekannten Außengriffen weitere Lichtaustrittsflächen an der Rückseite des Außengriffs vorgesehen.

Es ist die Aufgabe der vorliegenden Erfindung, bei einem Fahrzeug-Außengriff der eingangs genannten Art die Kontur des Außengriffes noch besser anzuzeigen.

Diese Aufgabe wird erfindungsgemäß dadurch gelöst, dass die eine oder mehreren Lichtaustrittsflächen auf der Oberseite des Außengriffs vorgesehen und durch einen sich längs des Außengriffs erstreckenden Lichtleiter gebildet ist bzw, sind.

Besonders bevorzugt ist bzw. sind die eine oder mehreren Lichtaustrittsflächen derart angeordnet und ausgerichtet, dass auch eine Griffschale des Außengriffs beleuchtet wird. Diese Maßnahme hat den Vorteil, dass mit nur einem einzigen Lichtleiter die Kontur und die Grifffschale des Außengriffs beleuchtet werden können.

Vorzugsweise werden ein oder mehrere Lichtleiter des Außengriffs dazu verwendet, unterschiedliche Schließzustände des Fahrzeugs anzuzeigen. Beispielsweise kann der Verriegelt- oder Entriegeltzustand durch Blinkanzeige oder farbliche Anzeige (Rot/grün) des auf der Griffoberseite vorgesehenen Lichtleiters angezeigt werden. Im Normalzustand kann der Lichtleiter weiß, bei Erreichen des Entriegelungszustandes zeitlich begrenzt grün und bei Erreichen des Verriegelungszustandes zeitlich begrenzt rot leuchten.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die erfindungsgemäße Beleuchtungsvorrichtung im Außentürgriff einer Fahrzeugtür,
- Fig. 2: ein erstes Ausführungsbeispiel der erfindungsgemäßen Beleuchtungsvorrichtung mit zwei Lichtleitern, die in der Ober- und Unterseite des Außentürgriffs angeordnet sind, in einer Draufsicht auf die Griffoberseite;
- Fig. 3: einen Querschnitt des in Fig. 2 gezeigten Außentürgriffs;
- Fig. 4: ein zweites Ausführungsbeispiel der erfindungsgemäßen Beleuchtungsvorrichtung mit zwei Lichtleitern, die in der Vorder- und Rückseite des Außentürgriffs angeordnet sind, in einer Draufsicht auf die Griffoberseite;
- Fig. 5: einen Querschnitt des in Fig. 4 gezeigten Außentürgriffs;
- Fig. 6: ein drittes Ausführungsbeispiel der erfindungsgemäßen Beleuchtungsvorrichtung mit Lichtfenstern im Außentürgriff, hinter denen ein Lichtleiter angeordnet ist, in einer Draufsicht auf die Griffoberseite; und
- Fig. 7: ein viertes Ausführungsbeispiel der erfindungsgemäßen Beleuchtungsvorrichtung mit Lichtfenstern im Außentürgriff, hinter denen jeweils eine punktförmige Lichtquelle angeordnet ist, in einer Draufsicht auf die Griffoberseite.

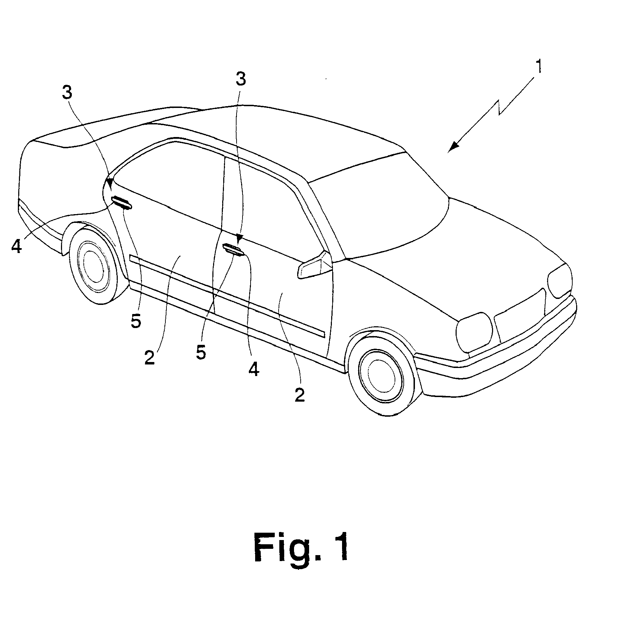

Das in **Fig. 1** gezeigte Fahrzeug **1** weist für jede Fahrzeugtür **2** jeweils eine Beleuchtungsvorrichtung **3** zur Beleuchtung des Außentürgriffs **4** und dessen Griffschale **5** auf.

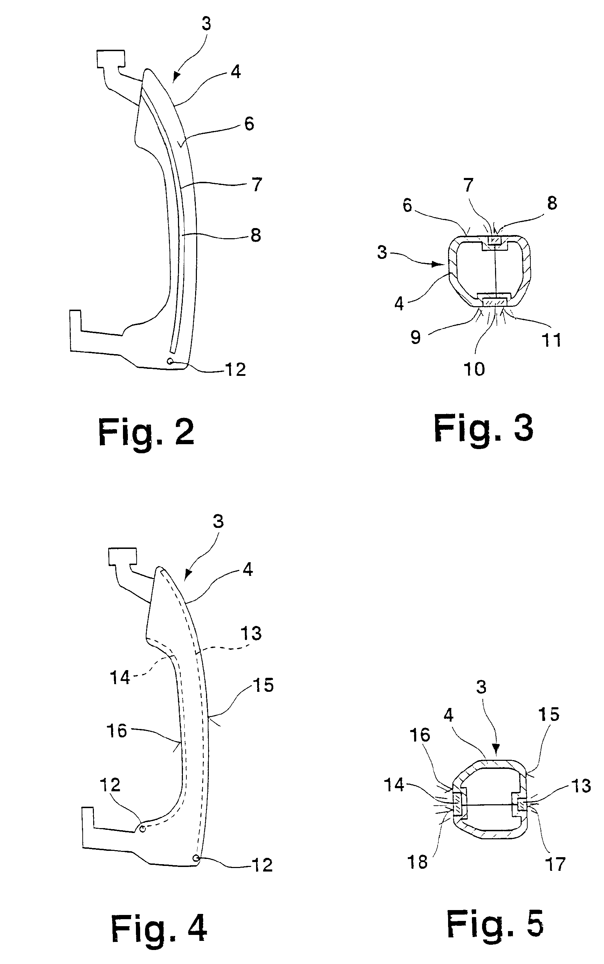

Bei dem in **Fig. 2** gezeigten ersten Ausführungsbeispiel der Beleuchtungsvorrichtung 3 weist der Außentürgriff **4** auf seiner Oberseite **6** eine durch einen oberen Lichtleiter **7** gebildete obere Lichtaustrittsfläche **8** und auf seiner Unterseite **9** eine durch einen unteren Lichtleiter **10** gebildete untere Lichtaustrittsfläche **11** auf. Wie **Fig. 3** zeigt, sind die beiden Lichtleiter 7, 10 in entsprechende Nuten des Außentürgriffs **4** eingelegt und schließen bündig mit der Ober- und Unterseite 6, 9 des Außentürgriffs 4 ab. Die beiden Lichtleiter 7, 10 erstrecken sich über die gesamte Länge (Kontur) des Außentürgriffs 4. Im Außentürgriff 4 ist vor jedem Lichtleiter 7, 10 mittig jeweils eine punktförmige Lichtquelle **12** vorgesehen, deren Licht stirnseitig in den jeweiligen Lichtleiter eingekoppelt wird. Das eingekoppelte Licht wird auf der gesamten Länge der Lichtleiter 7, 10 über deren mantelseitige Lichtaustrittsflächen 8, 11 ausgekoppelt, die hierfür beispielsweise aufgeraut sein können. Das ausgekoppelte Licht beleuchtet sowohl die hinter dem Türgriff 4 befindliche Griffschale 5 als auch den Bereich vor dem Türgriff 4. Statt der gezeigten einen Lichtquelle 12 können für jeden Lichtleiter 7, 10 auch jeweils zwei Lichtquellen vorgesehen sein, die vor beiden Stirnseiten des jeweiligen Lichtleiters angeordnet sind. Die Lichtquellen 12 für die beiden Lichtleiter 7, 10 können verschiedenfarbiges Licht abstrahlen. Es ist auch möglich, das Licht einer einzigen Lichtquelle in beide Lichtleiter 7, 10 einzukoppeln,

Vom ersten Ausführungsbeispiel der Fign. 2 und 3 unterscheidet sich das in **Fign. 4 und 5** gezeigte zweite Ausführungsbeispiel der Beleuchtungsvorrichtung 3 lediglich dadurch, dass hier die beiden Lichtleiter **13, 14** auf der der Griffschale 5 abgewandten Vorderseite **15** und auf der der Griffschale 5 abgewandten Rückseite **16** des Außentürgriffs 3 vorgesehen sind. Das über die Lichtquellen 12 stirnseitig eingekoppelte Licht wird auf der gesamten Länge der Lichtleiter 13, 14 über deren vorder- und rückseitige Lichtaustrittsflächen **17,18** mantelseitig ausgekoppelt, die hierfür beispielsweise aufgeraut sein können. Das aus der vorderseitigen Lichtaustrittsfläche 17 ausgekoppelte Licht beleuchtet den Bereich vor dem Türgriff 4, und das aus der rückseitigen Lichtaustrittsfläche 18 ausgekoppelte Licht beleuchtet die Griffschale 5.

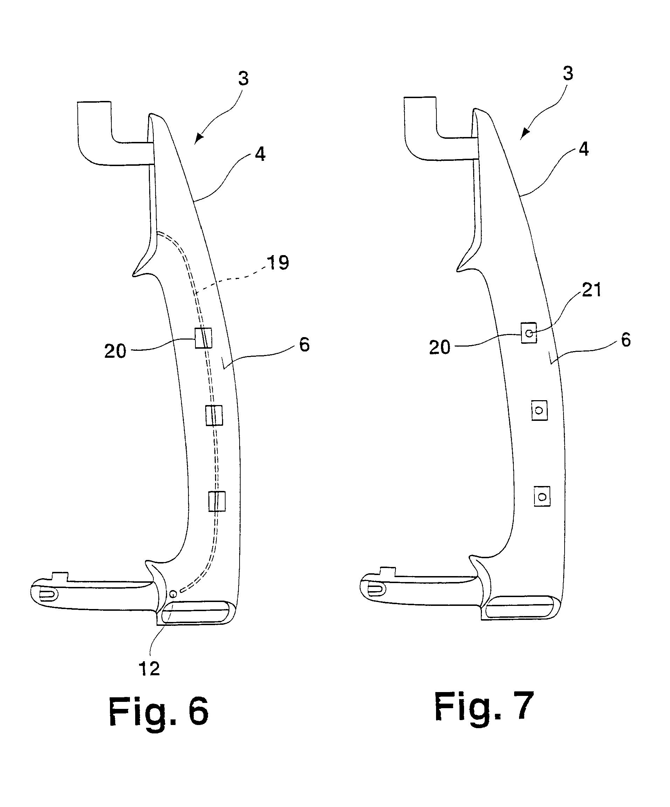

Vom ersten Ausführungsbeispiel der Fign. 2 und 3 unterscheidet sich das in **Fig. 6** gezeigte dritte Ausführungsbeispiel der Beleuchtungsvorrichtung 3 lediglich dadurch, dass der obere Lichtleiter **19** innerhalb des Außentürgriffs 4 angeordnet ist und in der Oberseite 6 des Außentürgriffs 4 entlang des oberen Lichtleiters 19 obere Lichtaustrittsflächen (Lichtaustrittsfenster) mit Lichtscheiben **20** oder sonstigen Optiken vorgesehen sind, über die das in den Lichtleiter 19 eingespeiste Licht nach oben aus dem Außentürgriff 4 abgestrahlt wird. Der untere Lichtleiter ist ebenfalls innerhalb des Außentürgriffs 4 angeordnet, dessen Unterseite entlang des unteren Lichtleiters untere Lichtaustrittsflächen (Lichtaustrittsfenster) mit Lichtscheiben oder sonstigen Optiken aufweist.

Vom dritten Ausführungsbeispiel der Fig. 6 unterscheidet sich das in Fig. 7 gezeigte vierte Ausführungsbeispiel der Beleuchtungsvorrichtung 3 lediglich dadurch, dass hier hinter den Lichtscheiben 20 kein Lichtleiter verläuft, sondern hinter jeder Lichtscheibe 20 eine eigene Lichtquelle **21** angeordnet ist.

## Patentansprüche

1. Fahrzeug-Außengriff (4), insbesondere Außentürgriff, mit mindestens einer im Gehäuse des Außengriffs (4) angeordneten Lichtquelle (12) und mit einer oder mehreren Lichtaustrittsflächen (8; 20), die die Kontur des Außengriffs (4) hinterleuchten oder leuchten lässt bzw. lassen,
**dadurch gekennzeichnet,**
**dass** die eine oder mehreren Lichtaustrittsflächen (8; 20) auf der Oberseite (6) des Außengriffs (4) vorgesehen und durch einen sich längs des Außengriffs (4) erstreckenden Lichtleiter (7) gebildet ist bzw. sind.

2. Fahrzeug-Außengriff nach Anspruch 1, **dadurch gekennzeichnet, dass** die die eine oder mehreren Lichtaustrittsflächen (8; 20) auch eine Griffschale (5) des Außengriffs (4) beleuchtet.

3. Fahrzeug-Außengriff nach Anspruch 1 oder 2, **dadurch gekennzeichnet, dass** der Außengriff (4) auf seiner Unterseite (9) mindestens eine untere Lichtaustrittsfläche (11) aufweist, die sich vorzugsweise längs des Außengriffs (4) erstreckt.

4. Fahrzeug-Außengriff nach einem der vorhergehenden Ansprüche, **dadurch gekennzeichnet, dass** der Außengriff (4) auf seiner einer Griffschale (5) zugewandten Rückseite (16) mindestens eine hintere Lichtaustrittsfläche (18) aufweist, die sich vorzugsweise längs des Außengriffs (4) erstreckt.

5. Fahrzeug-Außengriff nach einem der vorhergehenden Ansprüche, **dadurch gekennzeichnet, dass** der Außengriff (4) auf seiner einer Griffschale (5) abgewandten Vorderseite (15) mindestens eine vordere Lichtaustrittsfläche (17) aufweist, die sich vorzugsweise längs des Außengriffs (4) erstreckt.

6. Fahrzeug-Außengriff nach einem der Ansprüche 3 bis 5, **dadurch gekennzeichnet, dass** der einen oder mehreren unteren, hinteren bzw. vorderen Lichtaustrittsfläche (11, 17, 18) jeweils eine eigene Lichtquelle (12) zugeordnet ist.

7. Fahrzeug-Außengriff nach einem der Ansprüche 3 bis 6, **dadurch gekennzeichnet, dass** die eine oder mehreren unteren, hinteren bzw. vorderen Lichtaustrittsfläche (11, 17, 18) durch einen an der Unter, Rück- bzw. Vorderseite (9,15,16) des Außengriffs (4) vorgesehenen Lichtleiter (10, 13, 14) gebildet sind.

8. Fahrzeug-Außengriff nach einem der vorhergehenden Ansprüche, **dadurch gekennzeichnet, dass** die Oberfläche des bzw. der Lichtleiter (7, 10, 13, 14) aufgeraut ist.

9. Fahrzeug-Außengriff nach einem der vorhergehenden Ansprüche, **dadurch gekennzeichnet, dass** das Licht der Lichtquelle (12) mittig in den jeweiligen Lichtleiter (7, 10, 13, 14) eingekoppelt ist.

10. Fahrzeug-Außengriff nach einem der vorhergehenden Ansprüche, **dadurch gekennzeichnet, dass** bei mehreren Lichtleitern (7, 10, 13, 14) die jeweiligen Lichtquellen (12) oder die Lichtleiter (7, 10, 13, 14) verschiedenfarbig sind.

11. Fahrzeug-Außengriff nach einem der vorhergehenden Ansprüche, **dadurch gekennzeichnet, dass** mindestens ein Lichtleiter (7, 10, 13, 14), vorzugsweise der obere Lichtleiter (7), verschiedene Schließzustände des Fahrzeugs anzeigt.
